## Europäisches Patentamt

## European Patent Office

## Office européen des brevets

(19)

(11) Veröffentlichungsnummer: **0 122 609**
**B1**

(12)

# EUROPÄISCHE PATENTSCHRIFT

(45) Veröffentlichungstag der Patentschrift:
09.08.89

(21) Anmeldenummer: 84104142.9

(22) Anmeldetag: 12.04.84

(51) Int. Cl.⁴: **G 01 S   7/48**

(54) **Verfahren und Durchführungsanordnung zur Steuerung der von einem Wolkenhöhenmessgerät ausgesandten Messenergie.**

(30) Priorität: 18.04.83 SE 8302152

(43) Veröffentlichungstag der Anmeldung:
24.10.84 Patentblatt 84/43

(45) Bekanntmachung des Hinweises auf die Patenterteilung: 09.08.89 Patentblatt 89/32

(84) Benannte Vertragsstaaten:
DE FR GB

(56) Entgegenhaltungen:
EP—A— 0 066 889
DE—A— 2 833 635
US—A— 3 723 002
US—A— 3 898 007

(73) Patentinhaber: ASEA AB
S-721 83 Västeras (SE)

(72) Erfinder: Löfgren, Folke, Ing.
Svärdsgatan 8
S-723 47 Västeras (SE)
Erfinder: Söderström, Sven-Erik, Ing.
Stangjärnsgatan 237
S-724 73 Västeras (SE)

(74) Vertreter: Boecker, Joachim, Dr.-Ing.
Rathenauplatz 2-8
D-6000 Frankfurt a.M. 1 (DE)

## Beschreibung

Die vorliegende Erfindung betrifft ein Verfahren zur Steuerung der von einem Wolkenhöhenmeßgerät ausgesandten Meßenergie gemäß dem Oberbegriff des Anspruches 1 sowie ein Wolkenhöhenmeßgerät zur Durchführung des Verfahrens nach dem Oberbegriff des Anspruches 3. Ein solches Verfahren und ein solches Meßgerät sind bekannt aus der US-A-3 741 655.

Wolkenhöhenmeßgeräte, die nach dem Prinzip des optischen Radars arbeiten, senden Lichtsignale aus und verwenden die Größe des von Wassertropfen in der Atmosphäre reflektierten Lichtes (die Echosignale), um zu bestimmen, ob Wolken vorhanden sind oder ob die Konzentration der Tropfen unter der für Wolken geltenden Grenze liegt. Aus der Zeit zwischen dem Aussenden eines Lichtimpulses und dem Eintreffen des zugehörigen Echosignals mit der erforderlichen Größe ergibt sich die Höhe einer Wolke. Die Größe des Echosignals kann bei Nebel auch zur Berechnung der Sicht in vertikaler Richtung verwendet werden.

Sender und Empfänger sind in einem sogenannten Sendeempfänger eingebaut, der auch die Optik und die erforderliche elektronische Ausrüstung enthält. Das ausgesandte Licht durchdringt ein Senderfenster in der Schutzhaube des Sendeempfängers, und das reflektierte Licht durchdringt ein in derselben Schutzhaube angeordnetes Empfängerfenster, bevor es über die Empfängeroptik zu dem Signaldetektor gelangt. Verschmutzungen und/oder Wassertropfen auf den Fenstern der Schutzhaube bewirken eine nicht gleichbleibende Dämpfung der die Fenster passierenden Lichtimpulse, wodurch eine korrekte Identifizierung der von Wolken kommenden Echosignale oder eine korrekte Bestimmung der Sicht bei Nebel erschwert oder unmöglich gemacht wird.

Bei der bekannten Bestimmung der Wolkenhöhe durch Laufzeitmessung wird die Zeit bestimmt zwischen dem Aussenden eines Lichtimpulses und dem Eintreffen eines ein bestimmtes Niveau übersteigenden reflektierten Impulses am Empfänger. Auf ihrem Laufweg breiten sich die Lichtimpulse aus und werden durch Hindernisse unterschiedlicher Art gedämpft, wodurch die am Empfänger eintreffende Meßenergie erheblich niedriger als die ausgesandte ist. Wenn daher Sender mit niedriger Leistung verwendet werden, wie z. B. ein gepulster GaAS-Laser, ist eine Art Signalfilterung erforderlich, um Wolken in dem Höhenbereich erfassen zu können, in dem sich Flugverkehr abspielt.

Wenn die Meßenergie des empfangenen reflektierten Lichtes gering ist, ist es schwierig, die Meßsignale von dem Störpegel zu unterscheiden. Um trotzdem einigermaßen zuverlässige Messungen durchführen zu können, kann beispielsweise gemäß der US-A-3 741 655 verfahren werden. Bei dem dort beschriebenen Verfahren wird der Meßbereich in eine Anzahl von Höhenintervallen oder Höhenniveaus aufgeteilt. Dadurch, daß die Laufzeit der Meßimpulse für den Hinweg zu einem bestimmten Niveau und den Rückweg zum Empfänger berechnet wird, kann eine Messung des reflektierten Lichtes in dem Zeitintervall vorgenommen werden, in welchem das reflektierte Licht am Empfänger eintreffen muß, wenn innerhalb des gewählten Intervalls Wolken oder ein anderes Objekt vorhanden sind/ist. Ein solches Meßsignal besteht aus dem reflektierten Nutzsignal und dem Störpegel. Indem man auch eine Messung unmittelbar vor dem erwarteten Eintreffen des reflektierten Signals vornimmt, erhält man einen Meßwert, der nur den Störpegel enthält. Eine Anzahl solcher Messungen wird jeweils in einem Integrator integriert, deren Ausgangssignale schließlich miteinander verglichen werden. Falls ein signifikanter Unterschied feststellbar ist, so bedeutet dies, daß innerhalb des gerade untersuchten Höhenintervalles eine Wolke vorhanden ist. Da das Verhältnis von Nutzsignal zu Störpegel mit der Quadratwurzel aus der Anzahl integrierter Meßimpulse steigt, können trotz geringer Sendeleistung Wolken in verhältnismäßig großer Höhe erfaßt werden, indem pro Höhenintervall eine große Anzahl von Meßimpulsen integriert wird. Dieses Meßverfahren basiert auf einer Meßsequenz mit fest eingestellter, zeitgesteuerter Empfindlichkeitsregelung und/oder anderer Meßenergie.

Die Dämpfung des ausgesandten und zum Empfänger reflektierten Lichtes erfolgt im wesentlichen durch Wassertropfen, die sich im Luftraum zwischen Sender und Wolke befinden, und in Wassertropfen und/oder Schmutz auf dem Senderfenster und Empfängerfenster. Messungen haben ergeben, daß durch Wassertropfen, die sich bei Niederschlag auf den Fenstern angesammelt haben, die Echosignale von den Wolken auf bis zu 1/20 Ihres Wertes gedämpft werden. Bei fest eingestellter Empfindlichkeit während des Meßverlaufes muß auf diese Dämpfung Rücksicht genommen werden. Das bedeutet, daß bei günstigen Wetterverhältnissen mit einer zu hohen Empfindlichkeit mit der Folge falscher Meßwerte gearbeitet wird und bei starkem Niederschlag mit einer zu geringen Empfindlichkeit, so daß Wolken nicht mehr gemessen werden können.

Aus der DE-A-2 833 635 ist eine Steueranordnung für eine Reinigungsanordnung zur Säuberung verschmutzter optischer Grenzflächen bekannt. Die Steuerung der Reinigungsanordnung erfolgt in der Weise, daß von einer ausschließlich hierfür vorgesehenen lichtaussendenden Diode die zu reinigende Grenzfläche angestrahlt wird und die Intensität des reflektierten Lichtes gemessen wird. Wenn diese Intensität einen bestimmten Schwellwert überschreitet, wird die Reinigungsvorrichtung in Gang gesetzt. Handelt es sich um die Reinigung von Grenzflächen optischer Empfänger, so kann die Messung des von der verschmutzten Fläche reflektierten Lichtes der Diode durch den Empfänger selbst erfolgen.

Aus der US-A-3 898 007 ist ein optisches Entfernungsmeßgerät bekannt, mit welchem die Entfernung zu einer bestimmten reflektierenden Zielmarke ermittelt werden kann. Da die Intensität des reflektierten Lichtes mit zunehmender Entfernung des Meßobjektes abnimmt, ist bei dieser bekannten Einrichtung vorgesehen, daß die ausgesandte Lichtenergie in Abhängigkeit des empfangenen reflektierten Signals nachgesteuert wird, so daß unabhängig von der Entfernung des Meßobjektes das reflektierte Signal innerhalb eines für die Auswertung brauchbaren Bereiches liegt.

Der Erfindung liegt die Aufgabe zugrunde, ein Verfahren nebst Durchführungsanordnung der eingangs genannten Art zu entwickeln, bei welchem die oben genannte Abhängigkeit der Meßwerte von auf dem Senderfenster und dem Empfängerfenster vorhandenem Regen und/oder Schmutz praktisch beseitigt ist.

Zur Lösung dieser Aufgabe wird ein Verfahren gemäß dem Oberbegriff des Anspruches 1 vorgeschlagen, welches erfindungsgemäß die im kennzeichnenden Teil des Anspruches 1 genannten Merkmale hat.

Eine vorteilhafte Ausgestaltung des Verfahrens nach der Erfindung ist in Anspruch 2 genannt.

Ein Gerät zur Durchführung des Verfahrens gemäß der Erfindung ist durch die im Anspruch 3 genannten Merkmale gekennzeichnet.

Vorteilhafte Ausgestaltungen dieser Anordnung gemäß der Erfindung sind durch die in den Ansprüchen 4 bis 6 genannten Merkmale gekennzeichnet.

Durch das Verfahren gemäß der Erfindung ist eine genaue Trennung von Wolkenechosignalen und anderen Echosignalen möglich. Zugleich kann durch die Erfindung der mögliche Meßbereich innerhalb einer gegebenen Meßzeit und damit auch der Meßbereich insgesamt vergrößert werden. Die Erfindung gestattet es ferner, den dynamischen Bereich des Signaldetektors zu verringern, was sowohl den Einsatz eines besseren als auch weniger aufwendigen Anzeigesystems gestattet.

Das bei einem Verfahren und seiner Durchführungsanordnung gemäß der Erfindung für den Sendeempfänger verwendete Fensterglas ist in der Regel antireflexionsbehandelt, um nicht selbst eine größere Dämpfung der Lichtsignale zu verursachen.

Von der vom Sender ausgesandten Meßenergie MS (siehe Figur) verbleibt nach dem Passieren eines regen- und/oder schmutzbelegten Fensters die Meßenergie MU. Wenn auf dem Senderfenster ein äußerer Belag aus Regen und/oder Schmutz vorhanden ist, treten in dieser Schicht Reflexionen auf. Der Zusammenhang zwischen der Meßenergie MU und dem reflektierten Licht bei unterschiedlicher Meßenergie MS kann experimentell ermittelt werden. Dies bedeutet, daß beim Bekanntsein der aktuellen Meßenergie MS und des Wertes des reflektierten Lichtes die Dämpfung oder die ausgehende Meßenergie MU bestimmt werden kann. Hierdurch erhält man die Möglichkeit, über die Reflexionsmessung den Wert von MS so zu steuern, daß MU im wesentlichen konstant und unabhängig vom Verschmutzungsgrad der Fenster ist.

Durch das Verfahren gemäß der Erfindung wird die vom Sender ausgestrahlte Meßenergie soweit erhöht, daß die gesamte durch den Schmutzbelag auf dem Senderfenster und dem Empfängerfenster bedingte Dämpfung kompensiert wird. Diese Kompensation erfolgt selbsttätig und wird durch die Messung des reflektierten Lichtes gesteuert.

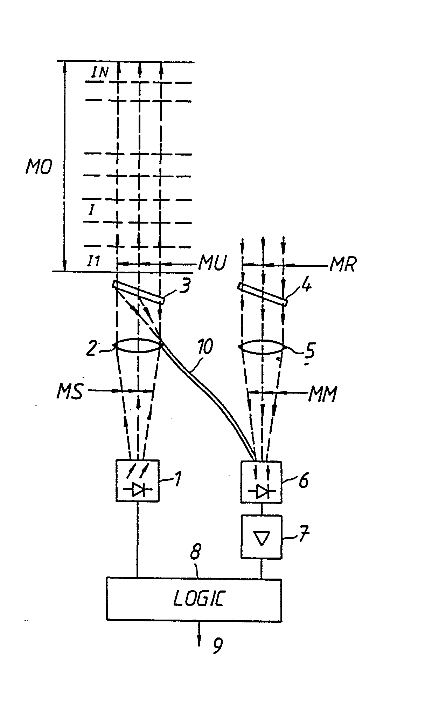

Anhand des in der Figur gezeigten Ausführungsbeispiel sollen das Verfahren und die Anordnung gemäß der Erfindung näher erläutert werden.

Das die Teile 1-9 umfassende Wolkenhöhenmeßgerät enthält auf der Senderseite einen Sender 1, eine Optik 2 und ein Senderfenster 3. Auf der Empfängerseite sind ein Empfängerfenster 4, eine Optik 5, ein Empfänger 6 und ein Signaldetektor 7 vorhanden. Der Prozessor 8 enthält die elektronische Ausrüstung, die unter anderem den Meßverlauf steuert, den Lasersender aktiviert, die Echosignale auswertet und in Meßdaten 9 umwandelt, die zu schreibenden und/oder zählenden Geräten übertragen werden. Mit 10 ist ein Lichtleiter bezeichnet.

Eine Anordnung zur Durchführung des Verfahrens gemäß der Erfindung stellt eine Zusatzeinrichtung zu einem Wolkenhöhenmeßgerät dar, welches nach dem Prinzip des optischen Radars arbeitet und zweckmäßigerweise ein integriertes Teil des Sendeempfängers ist.

Bei einer Ausführungsform gemäß der Figur wird Licht gemessen, welches von dem Belag auf der Außenseite des Senderfensters reflektiert wird. Da der Abstand zwischen Senderfenster und Empfängerfenster klein ist, kann vorausgesetzt werden, daß der Verschmutzungsgrad auf beiden Fenstern gleich groß ist.

Bei einer integrierten Ausführung nach der Figur werden Sender 1 und Empfänger 6 des Meßgerätes selbst benutzt, um eine eventuelle Verschmutzung zu erkennen. Das von der Außenseite des Senderfensters reflektierte Licht wird gesammelt und über den Lichtleiter 10 direkt zum Empfänger geleitet. Der zu dem Sendeempfänger gehörende Prozessor 8 wird programmgemäß mit einer besonderen Meßsequenz für diese Reflexion programmiert, und dieses Signal wird von dem Prozessor verarbeitet. Die Messung von Reflexionen vom Senderfenster, die von der Meßsequenz gesteuert ist, geschieht entweder vor oder nach der Wolkenhöhe, um diese nicht zu stören. Bei dem Gerät nach der Erfindung steuert das dem Verschmutzunggrad des Fensters entsprechende gemessene Reflexionssignal über den Prozessor die Energie der vom Sender ausgesandten Lichtimpulse, sodaß die gesamte durch Regen und/oder Schmutz auf dem Fenster bedingte Dämpfung kompensiert wird.

Eine Reflexionsmessung kann beispielsweise sowohl am Senderfenster als auch am Empfängerfenster erfolgen oder auch nur am Empfängerfenster. In einem solchen Falle wird ein Lichtleiter verwendet, um Licht vom Sender zur Bestrahlung des Empfängerfensters zu leiten.

## Patentansprüche

1. Verfahren zur Steuerung der Energie der Meßsignale eines Wolkenhöhenmeßgeräts, welches folgende Einrichtungen aufweist:
(i) einen Sender (1) zur Erzeugung der Meßsignale in Form von Impulsfolgen;
(ii) ein dem Sender nachgeordnetes Austrittsfenster (3) für die Meßsignale;
(iii) einen Empfänger (6) zur Erfassung der an Wolken reflektierten Meßsignale;
(iv) ein dem Empfänger vorgeordnetes Eintrittsfenster für reflektierte Meßsignale;
(v) Einrichtungen (8) zur Aktivierung des Empfängers jeweils zu vorgegebenen aufeinanderfolgenden Zeiten zwecks getrennter Erfassung der aus aufeinanderfolgenden Höhenintervallen des Gesamtmeßbereichs möglicherweise eintreffenden reflektierten Meßsignale;
(vi) Integrationsschaltungen zur Integration der aus jedem der Höhenintervalle empfangenen Meßsignale;
gekennzeichnet durch folgende Verfahrensschritte:
zur Messung der durch Belagsbildung aufgrund zum Beispiel von Regen und/oder Schmutz auf den Fenstern (3, 4) des Wolkenhöhenmeßgeräts bewirkten Meßsignaldämpfung werden an wenigstens einem der Fenster mittels des Senders (1) und des Empfängers (6) des Wolkenhöhenmeßgeräts in regelmäßigen Abständen Reflexionsmessungen durchgeführt;
in Abhängigkeit vom Ergebnis dieser Reflexionsmessungen wird die Energie der vom Sender erzeugten Meßsignale durch Änderung der Dauer der Impulsfolge und damit der Anzahl der Impulse der Folgen und/oder der Impulsfrequenz und/oder der Impulsenergie für jedes Höhenintervall derart gesteuert, daß die gesamte von den Meßsignalen beim Durchgang durch das Austritts- und das Eintrittsfenster erfahrene Dämpfung durch eine entsprechende Erhöhung der Senderenergie kompensiert wird.

2. Verfahren nach Anspruch 1, dadurch gekennzeichnet, daß die genannte Reflexionsmessung an den Fenstern mit Hilfe des eigenen Senders und Empfängers des Wolkenhöhenmeßgeräts vor oder nach dem normalen Meßablauf zur Ermittlung der Wolkenhöhe erfolgt.

3. Wolkenhöhenmeßgerät zur Durchführung des Verfahrens nach Anspruch 1 mit
(i) einem Sender (1) zur Erzeugung der Meßsignale in Form von Impulsfolgen;
(ii) einem Sender nachgeordneten Austrittsfenster (3) für die Meßsignale;
(iii) einem Empfänger (6) zur Erfassung der an Wolken reflektierten Meßsignale;
(iv) einem dem Empfänger vorgeordneten Eintrittsfenster für reflektierte Meßsignale;
(v) Einrichtungen (8) zur Aktivierung des Empfängers jeweils zu vorgegebenen aufeinanderfolgenden Zeiten zwecks getrennter Erfassung der aus aufeinanderfolgenden Höhenintervallen des Gesamtmeßbereichs möglicherweise eintreffenden reflektierten Meßsignale;
(vi) Integrationsschaltungen zur Integration der aus jedem der Höhenintervalle empfangenen Meßsignale;
gekennzeichnet durch
aus dem Sender (1) und dem Empfänger (6) bestehende Einrichtungen zur Bestimmung der durch Belagbildung auf den Fenstern (3, 4) bewirkten Dämpfung der Meßsignale durch Messung der von wenigstens einem der Fenster bewirkten Reflexion eines vom Sender in regelmäßigen Abständen erzeugten Prüfsignals zum Empfänger, und
Einrichtung (8) zur Steuerung der Energie der vom Sender zur Wolkenhöhenmessung erzeugten Meßsignale, welche Mittel zur Änderung der Dauer der Impulsfolgen und damit der Anzahl der Impulse der Folgen und/oder der Impulsfolgefrequenz und oder der Impulsenergie nach Maßgabe der ermittelten Fensterdämpfung aufweisen, und so ausgebildet sind, daß durch die von ihnen bewirkte Energieänderung die von den Fensterbelägen bedingten Dämpfungsverluste der Meßsignale für jedes Höhenintervall kompensiert werden.

4. Wolkenhöhenmeßgerät nach Anspruch 3, dadurch gekennzeichnet, daß die genannten Einrichtungen zur Bestimmung der durch Belagbildung bedingten Dämpfung einen Lichtleiter (10) umfassen, der mit einer optischen Linse versehen sein kann und der reflektiertes Licht vom Austrittsfenster (3) zum Empfänger (6) leitet.

5. Wolkenhöhenmeßgerät nach Anspruch 3, dadurch gekennzeichnet, daß die genannten Einrichtungen zur Bestimmung der durch Belagbildung bedingten Dämpfung einen Lichtleiter umfassen, der mit einer optischen Linse versehen sein kann, welcher Meßsignale zur Reflexionsmessung zum Eintrittsfenster leitet.

6. Wolkenhöhenmeßgerät nach Anspruch 3, dadurch gekennzeichnet, daß die genannten Einrichtungen zur Bestimmung der durch Belagbildung bedingten Dämpfung sowohl einen ersten Lichtleiter umfassen, der mit einer optischen Linse versehen sein kann und reflektiertes Licht vom Austrittsfenster (3) zum Empfänger (6) leitet, als auch einen zweiten Lichtleiter umfassen, der ebenfalls mit einer optischen Linse versehen sein kann und der das Meßsignal zur Reflexionsmessung zum Eintrittsfenster (4) leitet.

## Claims

1. Method for controlling the energy of the measuring signals emitted by a cloud height measuring device which comprises the following components:
(i) a transmitter (1) for generating measuring signals in the form of pulse sequences;
(ii) a leading-out window (3) for the measuring signals arranged after the transmitter ;

(iii) a receiver (6) for detection of measuring signals reflected from clouds ;

(iv) a leading-in window for the reflected signals arranged in front of the receiver ;

(v) equipment (8) for consecutively activating the receiver during pre-set consecutive time intervals for separate detection of possibly arriving reflected measuring signals from consecutive height intervals of the entire measurement range ;

(vi) integrating circuits for separate integrating of the measuring signals received from each height interval ;

characterized by the following process steps :

In order to measure the attenuation of the measuring signals caused by the formation of a coating of, for example, rain and/or dirt on the windows (3, 4) of the cloud height measuring device, reflection measurements are performed in regular intervals on at least one of the windows by means of the transmitter (1) and the receiver (6) of the cloud height measuring device ;

In dependence on the result of said reflection measurements, the energy of the measuring signals emitted by the transmitter is controlled by varying the length of the pulse sequence and thus by the number of pulses in the sequences and/or by the pulse frequency and/or by the pulse energy for each height interval in such a way that the entire attenuation of the measuring signals caused by the passage though the lead-out and the lead-in window is compensated for by a corresponding increase of the transmitter energy.

2. Method according to claim 1, characterized in that said reflection measurement at the windows is performed with the help of the transmitter and the receiver of the cloud height measuring device itself prior or subsequent to the normal measurement process of cloud height determination.

3. Cloud height measuring device for carrying out the method according to claim 1 with

(i) a transmitter (1) for generating measuring signals in the form of pulse sequences ;

(ii) a leading-out window (3) for the measuring signals arranged after the transmitter ;

(iii) a receiver (6) for detection of measuring signals reflected from clouds ;

(iv) a leading-in window for the reflected signals arranged in front of the receiver ;

(v) equipment (8) for consecutively activating the receiver during pre-set consecutive time intervals for separate detection of possibly arriving reflected measuring signals from consecutive height intervals of the entire measurement range ;

(vi) integrating circuits for separate integrating of the measuring signals received from each height interval ;

characterized by

means, comprising the transmitter (1) and the receiver (6), for determining the attenuation of the measuring signals ba the formation of a coating on the windows (3, 4) by measuring the reflection of a test signal, which is generated in regular intervals by the transmitter, from at least one of the windows to the receiver, and

means (8) for controlling the energy of the measuring signals generated by the transmitter for the cloud height measurement, which means includes means for varying the length of the pulse sequences and thus the number of pulses in the sequences and/or the pulse sequence frequency and/or the pulse energy according to the determined attenuation by the window, and which means is adapted, by said variation of the energy, to compensate for the attenuation losses of the measuring signals caused by the window coatings for each height interval.

4. Cloud height measuring device according to claim 3, characterized in that said means for determining the attenuation, caused by the formation of a coating, comprises a light conductor (10) which may comprise an optical lens and which guides reflected light from the lead-out window (3) to the receiver (6).

5. Cloud height measuring device according to claim 3, characterized in that said means for determining the attenuation, caused by the formation of a coating, comprises a light conductor which may comprise an optical lens and which guides measuring signals to the lead-in window for measuring the reflection.

6. Cloud height measuring device according to claim 3, characterized in that said means for determining the formation of the coating caused by attenuation comprises both, a first light conductor which may be provided with an optical lens and guides reflected light from the lead-out window (3) to the receiver (6), and a second light conductor, which may also be provided with an optical lens and guides the measuring signal for measuring the reflection to the lead-in window (4).

**Revendications**

1. Procédé pour contrôler l'énergie des signaux de mesure d'un appareil de mesure de la hauteur des nuages, qui comprend les dispositifs suivants :

(i) un émetteur (1) de production de signaux de mesure sous la forme de trains d'impulsions ;

(ii) une fenêtre de sortie (3) des signaux de mesure disposée en aval de l'émetteur ;

(iii) un récepteur (6) de détection des signaux de mesure réfléchis sur des nuages ;

(iv) une fenêtre d'entrée des signaux de mesure réfléchis disposée en amont du récepteur ;

(v) des dispositifs (8) destinés à activer le récepteur à des instants successifs donnés à l'avance en vue de la saisie individuelle des signaux de mesure réfléchis qui se présentent éventuellement et qui proviennent des intervalles successifs des hauteurs de toute la plage de mesure ;

(vi) des circuits intégrateurs destinés à intégrer les signaux de mesure reçus de chaque intervalle de hauteur ;
caractérisé en ce qu'il consiste :

pour mesurer l'atténuation du signal de mesure provoquée par la formation de couches, dues par exemple à la pluie et/ou aux saletés, sur les fenêtres (3, 4) de l'appareil de mesure de la hauteur des nuages, on procède, sur l'une au moins des fenêtres, à des mesures de réflexion à des intervalles réguliers au moyen de l'émetteur (1) et du récepteur (6) de l'appareil de mesure de la hauteur des nuages ;

en fonction du résultat de ces mesures de réflexion, on contrôle l'énergie des signaux de mesure produits par l'émetteur, en faisant varier la durée du train d'impulsions et, par suite, le nombre des impulsions des trains et/ou la fréquence des impulsions et/ou l'énergie des impulsions pour chaque intervalle de hauteur, de façon à compenser par une augmentation correspondante de l'énergie de l'émetteur, toute l'atténuation subie par les signaux de mesure au passage par la fenêtre de sortie et par la fenêtre d'entrée.

2. Procédé suivant la revendication 1, caractérisé en ce qu'il consiste à effectuer ladite mesure de réflexion au niveau des fenêtres à l'aide du propre émetteur et récepteur de l'appareil de mesure de la hauteur des nuages, avant ou après le déroulement normal de la mesure destinée à déterminer la hauteur des nuages.

3. Appareil de mesure de la hauteur des nuages pour la mise en oeuvre du procédé suivant la revendication 1, comprenant

(i) un émetteur (1) de production des signaux de mesure sous la forme de trains d'impulsions ;

(ii) une fenêtre de sortie (3) des signaux de mesure disposée en aval de l'émetteur ;

(iii) un récepteur (6) de saisie des signaux de mesure réfléchis sur des nuages ;

(iv) une fenêtre d'entrée des signaux de mesure réfléchis en amont du récepteur ;

(v) des dispositifs (8) destinés à activer le récepteur à des instants successifs donnés à l'avance en vue de la saisie individuelle des signaux de mesure réfléchis qui se présentent éventuellement et qui proviennent des intervalles successifs des hauteurs de toute la plage de mesure ;

(vi) des circuits intégrateurs destinés à intégrer les signaux de mesure reçus dans chaque intervalle de hauteur,
caractérisé par

des dispositifs constitués de l'émetteur (1) et du récepteur (6) et destinés à déterminer l'atténuation des signaux de mesure provoquées par la formation de couche sur les fenêtres (3, 4), en mesurant la réflexion vers le récepteur, provoquée par l'une au moins des fenêtres, d'un signal de contrôle produit par l'émetteur à des intervalles réguliers ; et

un dispositif (8) pour contrôler l'énergie des signaux de mesure produits par l'émetteur en vue de mesurer la hauteur des nuages et comportant des moyens pour faire varier la durée des trains d'impulsions et, par suite, le nombre des impulsions des trains et/ou la fréquence des impulsions des trains et/ou l'énergie des impulsions en fonction de l'atténuation déterminée due à la fenêtre, lesdits moyens étant constitués de façon que par la modification de l'énergie qu'ils provoquent, se trouvent compensées, pour chaque intervalle de hauteur, les pertes par atténuation des signaux de mesure, qui sont dues aux couches présentes sur les fenêtres.

4. Appareil de mesure de la hauteur des nuages, suivant la revendication 3, caractérisé en ce que lesdits dispositifs destinés à déterminer l'atténuation provoquée par la formation de couches, comprennent une fibre optique (10) qui peut être munie d'une lentille optique et qui conduit la lumière réfléchie de la fenêtre de sortie (3) au récepteur (6).

5. Appareil de mesure de la hauteur des nuages, suivant la revendication 3, caractérisé en ce que lesdits dispositifs destinés à déterminer l'atténuation provoquée par la formation de couches, comprennent une fibre optique qui peut être munie d'une lentille optique, et laquelle envoie des signaux de mesure à la fenêtre d'entrée pour la mesure de la réflexion.

6. Appareil de mesure de la hauteur des nuages, suivant la revendication 3, caractérisé en ce que lesdits dispositifs destinés à déterminer l'atténuation provoquée par la formation de couches comprennent à la fois une première fibre optique qui peut être munie d'une lentille optique et qui conduit la lumière réfléchie de la fenêtre de sortie (3) au récepteur (6), et une seconde fibre optique qui peut être munie également d'une lentille optique et qui conduit le signal de mesure à la fenêtre d'entrée (4) pour la mesure de la réflexion.